# EUROPÄISCHE PATENTSCHRIFT

(11) **EP 0 861 990 B1**
(45) Veröffentlichungstag und Bekanntmachung des Hinweises auf die Patenterteilung: **18.08.2004**
(21) Anmeldenummer: 98101559.7
(22) Anmeldetag: 29.01.1998
(51) Int. Cl.: F16C 29/00, F16C 29/06, B23Q 1/28

(54) **Linearführungseinrichtung**
Linear guiding device
Dispositif de guidage linéaire

(30) Priorität: 28.02.1997 DE 19708200; 05.09.1997 DE 19738987
(43) Veröffentlichungstag der Anmeldung: 02.09.1998
(73) Patentinhaber: Deutsche Star GmbH, 97424 Schweinfurt (DE)
(72) Erfinder: Klein, Michael, 97506 Grafenrheinfeld (DE); Rossteuscher, Heinz, 97525 Schwebheim (DE); Schlereth, Rudolf, 97705 Frauenroth (DE)
(74) Vertreter: Herzog, Markus, Dipl.-Phys. Dr.

(56) Entgegenhaltungen:
- DE-A- 4 225 523
- FR-A- 1 303 388
- GB-A- 616 799
- US-A- 3 259 020
- US-A- 3 663 027
- US-A- 5 044 780
- US-A- 5 181 780

## Beschreibung

Die Erfindung betrifft eine Linearführungseinrichtung u.a. umfassend mindestens eine auf einem Führungsbahnsystem geführte Führungswagenbaugruppe mit einer Bremseinrichtung zur Abbremsung oder/und Feststellung oder/und Schwingungsdämpfung der Führungswagenbaugruppe gegenüber dem Führungsbahnsystem, wobei die Bremseinrichtung mindestens eine Bremsfläche umfaßt, welcher mit der Führungswagenbaugruppe zur gemeinsamen Bewegung längs des Führungsbahnsystems verbunden ist, wobei weiter diese Bremsfläche zum reibenden Eingriff mit einer in Längsrichtung des Führungsbahnsystems verlaufenden Bremsbahn bestimmt und eingerichtet ist, und wobei die Bremsfläche durch einen flexiblen Bremsflächenträger getragen und durch Fluidendruckaufbau in einer an den Bremsflächenträger angrenzenden Fluidendruckkammer gegen die Bremsbahn andrückbar ist.

Linearführungseinrichtungen dieser Art sind bekannt, beispielsweise aus der DE 37 42 965 A1, der DE 41 04 717 A1 und der DE 195 33 077 A1.

Die Ausführungsformen nach den beiden erstgenannten Offenlegungsschriften beruhen darauf, daß der jeweilige Bremsschuh von einer räumlich geformten Blähkammer getragen ist, die aus flexiblem Material besteht und durch Erhöhung des in ihrem Innenraum herrschenden Fluidendrucks so deformiert werden kann, daß der Bremsschuh an der Bremsbahn mehr oder minder stark angedrückt wird.

Es hat sich gezeigt, daß es relativ schwierig ist, die Blähkammern so formstabil auszuführen, daß der Bremsschuh im drucklosen Zustand eine definierte Lage gegenüber der Bremsbahn einnimmt. So ist nicht auszuschließen, daß der Bremsschuh im drucklosen Zustand unkontrolliert und mit ungleichmäßiger Anlage an der jeweiligen Bremsbahn anliegt.

Die DE 195 33 077 A1 zeigt einen völlig anderen Weg auf. Sie verzichtet darauf, den Bremsschuh an einer insgesamt flexiblen Blähhaut zu lagern, wie dies aus den beiden erstgenannten Druckschriften grundsätzlich bekannt war, und bringt den Bremsschuh an einem einstückig mit dem Grundkörper einer Läuferbaugruppe angeordneten Biegearm an, der um ein sich über die ganze Länge des Läufers erstreckendes, als Schwächungsstelle ausgebildetes Gelenk schwenkbar ist. Bei dieser Ausführungsform läßt sich zwar eine definierte Stellung des Bremsschuhs in Abwesenheit von Druckbeaufschlagung erhalten. Andererseits wird durch die Schwenklagerung ein gleichmäßiges Aufliegen der wirksamen Bremsfläche des Bremsschuhs auf die Bremsbahn sehr erschwert, wenn nicht unmöglich gemacht. Hinzu kommt noch, daß durch die Art der einstückigen Lagerung des Bremsschuhs an dem Läufer auch eine Selbsteinstellung der Parallelität des Bremsschuhs zu der Bremsbahn in Laufrichtung praktisch unmöglich ist.

Ausgehend von der DE-A-4 104 717, die dem Oberbegriff der Auspruchs 1 entspricht, liegt der Erfindung die Aufgabe zugrunde, mit einfachen Mitteln eine Bremseinrichtung zu schaffen, bei der einerseits im drucklosen Zustand eine relativ gut definierte Lage des Bremsschuhs gegenüber der Bremsbahn gewährleistet ist und andererseits eine gleichmäßige Druckeinwirkung des Bremsschuhs auf die Bremsbahn möglich wird. Weiterhin soll die Bremseinrichtung hinsichtlich der mechanischen Bearbeitung und der Montage einfach und kostengünstig sein und eine effektive Abdichtung der fluidenführenden Räume über lange Zeit gewährleistet sein.

Zur Lösung dieser Aufgabe wird erfindungsgemäß vorgeschlagen, der flexibler Bremsflächenträger gemäß dem Kennzeichen des Anspruchs 1 auszubilden.

Wenn bei der vorliegenden Erfindung von Fluidendruckeinwirkung gesprochen wird, so kommen als Betriebsfluide sowohl Flüssigkeiten als auch Gase in Frage. Der Begriff "Flüssigkeit" soll dabei auch zähe bis zähelastische Medien umfassen.

Die Ausgestaltung des flexiblen Bremsflächenträgers als plattenförmige oder flachschalenförmige Begrenzungswand stellt sicher, daß auch nach langer Gebrauchszeit im drucklosen Zustand eine definierte Lage der Bremsfläche gegenüber der Bremsbahn besteht, so daß die Bremsfläche mit geringem Abstand gegenüber der Bremsbahn eingestellt werden kann, wenn eine Anlage im unbelasteten Zustand unerwünscht ist. Sollte es andererseits erwünscht sein, im drucklosen Zustand eine gewisse Mindestreibung einzustellen, so läßt sich diese bei Ausbildung des Bremsflächenträgers als plattenförmige oder flachschalenförmige Begrenzungswand ebenfalls relativ genau einstellen, da die aus relativ steifem Material bestehende Begrenzungswand ein kontrollierbares Wölbungsverhalten besitzt.

Durch entsprechende Abstimmung der Größe und Lage der Bremsfläche relativ zu dem Umriß der Begrenzungswand läßt sich eine solche Lagerung der Bremsfläche erreichen, daß bei Fluiddruckeinwirkung auf die Begrenzungswand mit guter Gleichmäßigkeit der Flächenpressungen zwischen Bremsfläche und Bremsbahn gerechnet werden kann.

Die Begrenzungswand kann einstückig mit einem versteifenden Rahmen ausgebildet sein. Wird die Begrenzungswand aus Kunststoff hergestellt, so ist es ohne weiteres möglich, Begrenzungswand und Rahmen aus Kunststoff zu gießen oder zu pressen, insbesondere nach der Spritzgußtechnik. Wird die Begrenzungswand aus Metall, z. B. Stahl, hergestellt, so läßt sie sich mit dem Rahmen durch einfache spanabhebende Bearbeitungsvorgänge, bei großen Stückzahlen und Rentierlichkeit entsprechender Werkzeuge aber auch durch plastische Kalt- oder Warmverformung herstellen.

Die Bremsfläche selbst kann ebenfalls einstückig mit der Begrenzungswand ausgebildet werden, vorzugsweise als Teil eines vorspringenden Bremsschuhs.

Eine nahezu kardanische Lagerung des Bremsschuhs läßt sich erreichen, wenn der Verbindungsbereich der Bremsfläche mit der Begrenzungswand von dem Randbereich allseitigen Abstand.

Der versteifende Rahmen kann auf der von der Bremsfläche abgelegenen Seite der Begrenzungswand zur fluiddichten Anlage an einer Gegenanlagefläche der Linearführungseinrichtung vorspringen. Damit ergibt sich eine mögliche Flachschalenform.

Im Hinblick auf etwaige Reparaturen ist vorgesehen, daß die Begrenzungswand an der Führungswagenbaugruppe lösbar befestigt ist, beispielsweise durch Schraubmittel und/oder durch formschlüssigen Eingriff.

Die Befestigung des Bremsflächentrigers so erfolgen, daß ein dem Stegteil naher Teil des Randbereichs in die Führungswagenbaugruppe formschlüssig eingreift und ein dem Stegteil fernerer Teil des Randbereichs an der Führungswagenbaugruppe unter Sicherung des formschlüssigen Eingriffs befestigt ist. Dabei kann der Randbereich mindestens einen Befestigungsflansch aufweisen, welcher an einer dem Stegteil fernen Endfläche des jeweiligen Schenkelteils anliegt und dort - vorzugsweise durch Schraubmittel - befestigt ist.

Die Bremsfläche des Führungsbahnsystems kann beispielsweise zur Anlage an einer als Bremsbahn ausgebildeten Bodenfläche einer in einer Seitenfläche einer Führungsschiene versenkt liegenden Führungsnut ausgebildet sein; dies gilt insbesondere dann, wenn die Flankenflächen dieser Führungsnut zur Führung der Führungswagenbaugruppe bestimmt und ausgebildet sind.

Die Führungswagenbaugruppe kann einen durch Rollmittel an dem Führungsbahnsystem geführten Laufwagen umfassen. Die Bremseinrichtung kann dann entweder an dem Laufwagen unmittelbar angeordnet sein; es ist aber auch möglich, daß die Bremseinrichtung als eine gesonderte, mit dem Laufwagen zur gemeinsamen Bewegung verbundene Baugruppe ausgebildet ist, welche an dem Laufwagen lösbar oder unlösbar befestigt wird. Dabei kann die Bremseinrichtung an dem Laufwagen entweder unmittelbar befestigt sein oder unter Vermittlung eines Objekts oder eines anderen Brückenteils.

Die Begrenzungswand kann als Metallteil, insbesondere Stahlteil, hergestellt werden, unter Umständen auch als ein steifes Kunststoffteil. Im Gegensatz zu Blähschläuchen, wie sie beispielsweise aus der DE 41 04 717 A1 als Träger von Bremsflächen bekannt sind, sollen die erfindungsgemäß zur Anwendung kommenden Begrenzungswände eine sehr viel höhere Drucksteifigkeit in der jeweiligen Wandebene besitzen.

Die Begrenzungswand kann nach einer ersten Ausführungsform um zwei zueinander im wesentlichen orthogonale Achsen biegbar sein. In diesem Fall entsteht bei der Wölbung eine 3-dimensionale Kuppelfläche und man kann die Begrenzungswand als eine rundum eingespannte Membran ansprechen.

Nach einer weiteren Ausführungsform ist die Begrenzungswand nach Art eines Biegebalkens in zwei voneinander beabstandeten Teilbereichen ihres Umfangsbereichs eingespannt. In diesem Fall stellt sich die bei Druckbeaufschlagung einstellende Wölbung als eine im wesentlichen zylindrische Wölbung dar, wobei der Wölbungsbogen nicht etwa ein Kreisbogen sein muß, sondern beispielsweise parabelförmigen Verlauf haben kann.

Dabei erweist es sich als vorteilhaft, wenn die Begrenzungswand an ihren in Längsrichtung des Führungsbahnsystem beabstandeten Enden eingespannt ist. Mindestens eines dieser Enden kann dabei in einem Schlitz einer Endplatte aufgenommen und dadurch eingespannt sein.

Die beiliegenden Figuren erläutern die Erfindung anhand eines Ausführungsbeispiels. Es stellen dar:
- Fig. 1: eine Gesamtansicht einer erfindungsgemäßen Linearführungseinrichtung;
- Fig. 2: den Schnitt II-II gemäß Fig. 1;
- Fig. 3: den Schnitt III-III gemäß Fig. 1;
- Fig. 4: eine Draufsicht auf eine Begrenzungswand einer erfindungsgemäßen Bremseinrichtung;
- Fig. 5: den Schnitt V-V gemäß Fig. 4,
- Fig. 6: eine Explosionsdarstellung einer weiteren Ausführungsform und
- Fig. 7: einen Schnitt nach Linie VII-VII der Fig. 6.

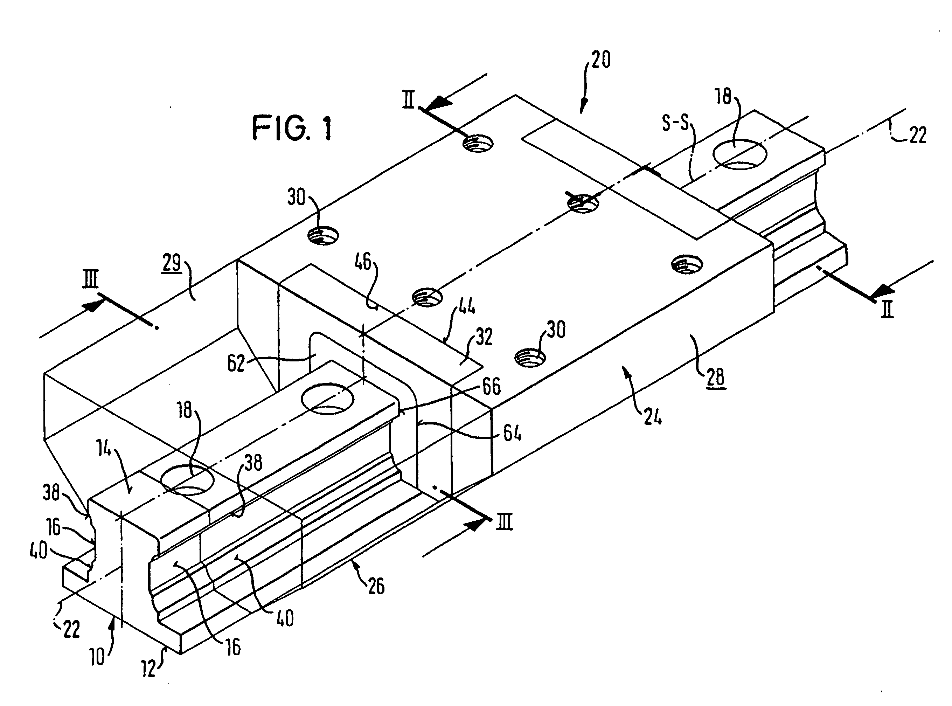

In Fig. 1 ist eine Führungsschiene mit 10 bezeichnet. Diese Führungsschiene 10 weist eine Basisfläche 12, eine Kopffläche 14 und zwei Seitenflächen 16 auf. Die Führungsschiene 10 wird von mittigen Bohrungen 18 durchsetzt und kann durch Gewindebolzen, die diese Bohrungen 18 durchsetzen, auf einer Grundkonstruktion (nicht dargestellt) befestigt werden.

Auf der Führungsschiene 10 ist eine Führungswagenbaugruppe 20 längs einer Schienenachse 22 verschiebbar geführt. Die Führungswagenbaugruppe 20 besteht aus einer Läuferbaugruppe 24 und einer Bremseinrichtungsbaugruppe 26, die zur gemeinsamen Bewegung miteinander z.B. durch Verschrauben verbunden sind. An dem Grundkörper 28 der Läuferbaugruppe 24 sind Bohrungen 30 angedeutet. Diese als Gewindebohrungen ausgebildeten Bohrungen dienen zur Aufnahme von Bolzen, mittels welcher ein Objekt, beispielsweise ein Tisch, auf dem Grundkörper 28 befestigt werden kann.

Die Bremseinrichtungsbaugruppe 26 kann in gleicher Weise an dem Objekt bzw. dem Tisch befestigt sein, so daß die Bremseinrichtungsbaugruppe 26 durch das Objekt bzw. den Tisch oder eine Brücke mit der Läuferbaugruppe 24 verbunden ist. Alternativ kann auch vorgesehen sein, daß die Bremseinrichtungsbaugruppe 26 in den Grundkörper 28 der Läuferbaugruppe 24 integriert ist.

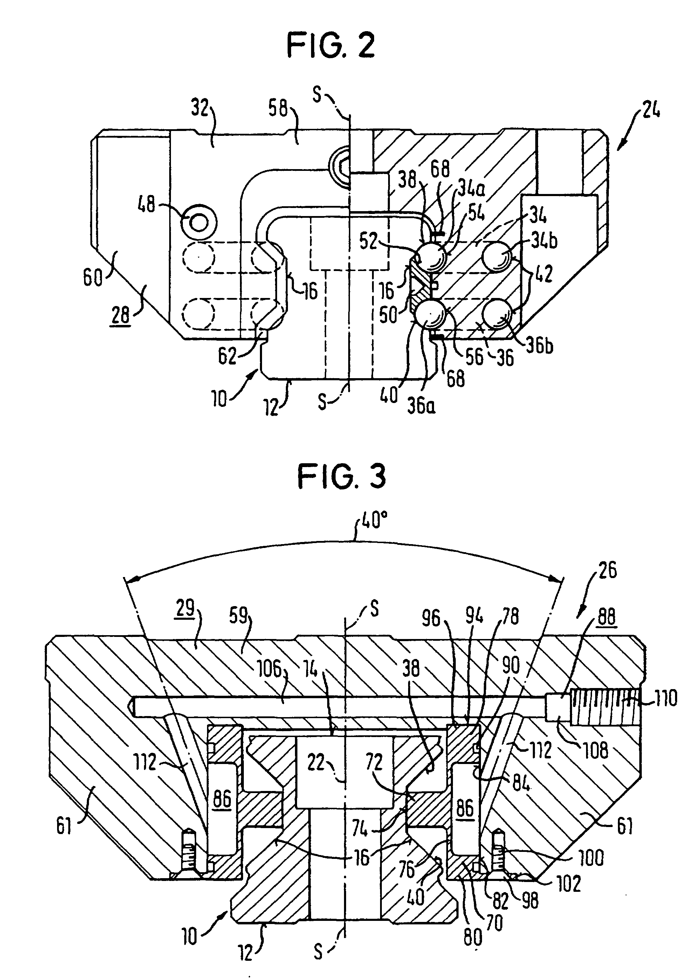

In Fig. 2 ist der Grundaufbau der Läuferbaugruppe 24 angedeutet. Diese Läuferbaugruppe 24 umfaßt den Grundkörper 28 und, wie aus Fig. 1 ersichtlich, Kopfstücke 32. Die Läuferbaugruppe 24 ist auf der Führungsschiene 10 durch insgesamt vier endlose Kugelumläufe oder alternativ Rollenumläufe geführt. Die Kugelumläufe sind mit 34 und 36 bezeichnet. Jeder Kugelumlauf 34,36 weist eine tragende Laufkugelreihe 34a bzw. 36a und eine rücklaufende Laufkugelreihe 34b bzw. 36b auf. Die tragenden und die rücklaufenden Laufkugelreihen 34a,36a bzw. 34b,36b sind durch Bogenkugelreihen (nicht dargestellt) miteinander verbunden, welche in den Kopfstücken 32 geführt sind. Die tragenden Laufkugelreihen 34a und 36a laufen auf Führungsbahnen 38 und 40 der Seitenflächen 16 und die rücklaufenden Laufkugelreihen 36b,38b werden innerhalb des Grundkörpers 28 in Rücklaufbohrungen 42 geführt. Jeweils zwei Kugelumläufe 34,36 liegen auf einer Ebene, die orthogonal zur Symmetrieebene S-S der Linearführungseinrichtung liegt.

Die in den beiden längsseitigen Endbereichen des Grundkörpers 28 liegenden Kopfstücke 32 sind mit ihren jeweiligen Anlageflächen 44 innerhalb einer Ausnehmung untergebracht, welche eine Anlagefläche 46 des Grundkörpers 28 bildet. Vier U-förmige Ausnehmungen (nicht dargestellt) in den Kopfstücken 32 bilden äußere Umlenkflächen für die Bogenkugelreihen. Weiterhin können in den Kopfstücken 32 Umlenkstücke (nicht dargestellt) plaziert sein, sowie ein Versorgungsanschluß 48 für ein nicht dargestelltes Schmiermittelversorgungssystem, das die Versorgung der vier Kugelumläufe 34,36 mit Schmierstoff sicherstellt. Insoweit kann auf die DE 36 20 571 verwiesen werden.

In Fig. 2 erkennt man zwei sich axial erstreckende Haltestege 50, die zusammen mit der Endplatte 32 einstückig ausgebildet sind und die Aufgabe haben, die lastübertragenden Laufkugelreihen 34a,36a im Grundkörper 28 während des Bewegungsablaufs zu führen, d. h. vermittels der Haltebahnen 52 an den Laufbahnen 54,56 des Grundkörpers 28 zu halten, und zwar schon vor dem Zusammenbau des Grundkörpers 28 mit der Schiene 10, bei dem dann die lastübertragenden Laufkugelreihen 34a,36a in Eingriff mit den lastaufnehmenden Führungsbahnen 38,40 der Schiene 10 kommen. Dadurch ist sichergestellt, daß die Laufkugeln auch außerhalb der Schiene 10 im Grundkörper 28 sicher gehalten sind.

Wie man insbesondere in der Fig. 2 sieht, ist der Grundkörper 28 im wesentlichen U-förmig mit einem einer Kopffläche 14 der Führungsschiene 10 benachbarten Stegteil 58 und mit den Seitenflächen 16 der Führungsschiene 10 benachbarten Schenkelteilen 60 ausgeführt. Um ein Eindringen von Schmutz in den Bereich der Kugelumläufe 34,36 zu verhindern, sind die Kopfstücke 32 mit Dichtplatten 62 versehen, die in Ausnehmungen 64 der Endplatten 32 aufgenommen sind. Die Dichtplatten 62 verhindern mit ihrer dem Profil der Schiene 10 folgenden Dichtkante 66 das Eindringen von Schmutz, und zusätzlich eingelegte Dichtstreifen 68, die unmittelbar oberhalb bzw. unterhalb der lastübertragenden Laufkugelreihen 34a,36a im Grundkörper 28 sowie an den Endplatten 32 angebracht sind und bis an die Dichtplatten 62 heranreichen, sorgen dafür, daß kein Schmutz, der eventuell über die Schienenbohrungen 18 in den Grundkörper 28 hineingelangt ist, die Laufkugeln bzw. die Kontaktzone mit der Schiene 10 erreicht. Damit ist eine annähernd hermetische Abdichtung des Abwälzbereichs ermöglicht.

In Fig. 3 ist die erfindungsgemäße Bremseinrichtungsbaugruppe 26 dargestellt (im folgenden Bremseinrichtung genannt), die einen Grundkörper 29 aufweist und zur Abbremsung der Führungswagenbaugruppe 20 dient. Die Bremseinrichtung 26 weist, wie aus Fig. 3 ersichtlich, den einstückigen, U-förmigen Grundkörper 29 auf, welcher die Führungsschiene 10 umgreift, mit einem Stegteil 59 der Kopffläche 14 der Führungsschiene 10 gegenüberliegt und mit seinen Schenkeln 61 den Seitenflächen 16 der Schiene 10 gegenüberliegt.

Im folgenden genügt die Beschreibung einer Symmetriehälfte der in Fig. 3 dargestellten Bremseinrichtung 26, da diese in bezug auf die Symmetrieebene S-S symmetrisch unterteilt ist.

Die Bremseinrichtung 26 umfaßt eine flachschalenförmige Begrenzungswand 70, die an dem Schenkel 61 des Grundkörpers 29 angebracht ist, und zwar so, daß sie einer Seitenfläche 16 der Führungsschiene 10 gegenüberliegt. Auf der schienennahen Seite der Begrenzungswand 70 ist ein Bremsschuh 72 vorgesehen, welcher gegen eine Bremsbahn 74 der Führungsschiene 10 andrückbar ist. Die Bremsbahn 74 ist, wie in Fig. 3 zu sehen, zwischen den beiden Laufbahnen 38,40 angeordnet. Der Bremsschuh 72 sitzt mit seinem schienenfernen Ende auf einem flexiblen Bremsflächenträger auf, nämlich auf einem zentralen Flachmembranbereich 76 der Begrenzungswand 70. Der Randbereich der Begrenzungswand 70 ist einstückig mit dieser als ein im wesentlichen starrer Rahmen 78.

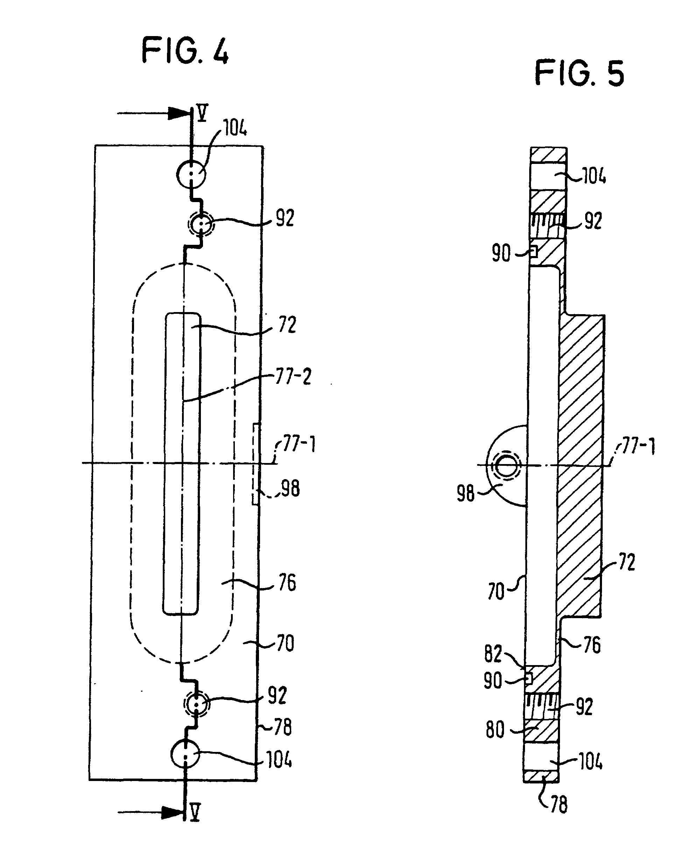

Wie man in Fig. 4 sieht, ist der Verbindungsbereich des Bremsschuhs 72 mit dem Flachmembranbereich 76 von dem Rahmen 78 allseitig beabstandet. Wie man insbesondere in Fig. 3 sieht, weist der Rahmen 78 auf der vom Bremsschuh 72 abgelegenen Seite des Flachmembranbereichs 76 einen über die Ebene des Flachmembranbereichs 76 vorspringenden Überstand 80 mit einer Anlagefläche 82 zur fluiddichten Anlage an einer Gegenanlagefläche 84 des Grundkörpers 29 auf, so daß durch den Flachmembranbereich 76, den Rahmen 78, den Überstand 80 und die Gegenanlagefläche 84 eine Druckkammer 86 für die Aufnahme eines Bremsmediums gebildet wird. Dieses Bremsmedium ist beispielsweise ein hydraulisches Öl oder ein Gas. Die Begrenzungswand 70 hat ihren Namen wegen ihrer Funktion der Begrenzung der Druckkammer 86.

Die Druckkammer 86 ist über den Leitungsweg 88 mit einer nicht dargestellten Bremsmedium-Versorgungseinrichtung verbunden, welche den für die Betätigung der Bremseinrichtung 26 nötigen Bremsdruck bereitstellt. Zur Abdichtung der Anlagefläche 82 der Begrenzungswand 70 gegenüber der Gegenanlagefläche 84 des Schenkels 61 kann beispielsweise eine Ringdichtung in einer den Membranbereich 76 umschließenden Ringnut 90 des Überstands 80 untergebracht sein, so daß die Abdichtung allerseits geschützt und gestützt ist und deshalb über lange Standzeiten dicht bleibt.

Der Rahmen 78 ist an dem Grundkörper 29 durch Gewindebolzen lösbar befestigt, wobei die Gewindebohrungen so angeordnet sind, daß auch im zusammengebauten Zustand, d. h. wenn der Grundkörper 29 bereits an der Führungsschiene 10 angeordnet ist, die Gewindebolzen in die zugehörigen Bohrungen eingesetzt und anschließend verschraubt werden können, was ein einfaches nachträgliches Justieren des Bremsschuhs 72 relativ zur zugehörigen Bremsbahn 74 erlaubt.

In Fig. 4 erkennt man in den Endbereichen des Rahmens 78 Gewindebohrungen 92, in welche nicht dargestellte Gewindebolzen von der schienenfernen Seite des Schenkels 61 aus eingreifen. Um auch bei hohen Bremsdrücken ein Abheben des Rahmens 78 von der Gegenanlagefläche 84 und damit ein Austreten von Bremsmedium zu verhindern, ist der Grundkörper 29 im führungsschienennahen Bereich des Stegteils 59 mit einer Ausnehmung 94 versehen, in welche der Rahmen 78 mit einem stegteilnahen Bereich 96 formschlüssig eingreift. Zusätzlich ist der Rahmen 78 in einem stegteilfernen Bereich mit einem Befestigungsflansch 98 versehen, der über Befestigungschrauben 100 mit einem stegteilfernen Bereich des Schenkels 61 des Grundkörpers 29 verschraubt ist. Der Befestigungsflansch 98 ist in einer Ausnehmung 102 des Schenkels 61 versenkt angeordnet, und die Befestigungsschrauben 100 sind in dem Befestigungsflansch 98 versenkt, wodurch eine glatte Oberfläche erreicht wird. Für die genaue Positionierung des Rahmens 78 und damit des Bremsschuhs 72 gegenüber der Bremsbahn 74 kann man auf Paßstifte zurückgreifen, die in entsprechende Paßbohrungen 104 in dem Rahmen 78 sowie dem Schenkel 61 eingesetzt werden.

Der Leitungsweg 88 für das Bremsmedium verläuft im wesentlichen U-förmig mit einer horizontal verlaufenden Hauptbremsleitung 106, die in ihrem Eingangsbereich eine Anschlußbohrung 108 mit Gewindeanschluß 110 aufweist und mit einer nicht dargestellten Versorgungseinrichtung verbunden ist. Von der Hauptbremsleitung 106 zweigen zwei Nebenleitungen 112 ab, die unter einem Winkel von ca. 40° konvergieren. Die Nebenleitungen 112 verbinden die Druckkammern 86 mit der Hauptbremsleitung 106 und der Versorgungseinrichtung.

Wird über den Leitungsweg 88 der Fluiddruck des Bremsmediums in der Druckkammer 86 erhöht, wölbt sich der Flachmembranbereich 76 elastisch um die beiden Biegeachsen 77-1 und 77-2 zur Bremsbahn 74 hin und drückt den Bremsschuh 72 an die Bremsbahn 74. Durch entsprechende Abstimmung der Größe und Lage des Bremsschuhs 72 relativ zu dem Umriß des Flachmembranbereichs 76 läßt sich eine annähernd kardanische Lagerung des Bremsschuhs 72 erreichen, so daß der Bremsshuh 72 mit annähernd gleichen Flächenpressungen über den gesamten Anlagebereich zwischen Bremsschuh 72 und Bremsbahn 74 anliegt.

Wird der Druck in der Druckkammer 86 nachfolgend abgesenkt, so zieht sich der beispielsweise einstückig mit dem Rahmen 78 aus Stahl hergestellte Flachmembranbereich 76 elastisch in seine Planlage zurück und verdrängt das Bremsmedium aus der Druckkammer 86. Der mit dem Flachmembranbereich 76 verbundene Bremsschuh 72 löst sich von der Bremsbahn 74 und kehrt (bei entsprechender Drucksenkung) in seinen Ausgangszustand zurück. Soll die Bremseinrichtung 26 zur Schwingungsdämpfung des Grundkörpers 29 gegenüber der Führungsschiene 10 verwendet werden, so wird der Druck in der Druckkammer 86 des Bremskörpers 70 so eingestellt, daß der Bremsschuh 72 an der Bremsbahn 74 unter geringem Druck anliegt und somit die auftretenden Schwingungen gedämpft werden. Die Dämpfungskräfte werden dabei durch den Flachmembranbereich 76 auf den Grundkörper 29 übertragen.

Da die Gegenanlagefläche 84 ein Teil der Begrenzung der Druckkammer 86 bildet und die Nebenleitung 112 in einem Winkel von ungefähr 20° zur Symmetrieebene S-S des Bremskörpers 70 verläuft, kann die Nebenleitung 112 von der schienennahen Seite des Schenkels 61 des Grundkörpers 29 aus eingebracht werden, wodurch zusätzliche Dichtmaßnahmen vermieden werden.

Die Bedeutung der erfindungsgemäßen Vorrichtung erkennt man ohne weiteres daran, daß die Bremseinrichtung 26 aus wenigen und einfachen Teilen besteht, wobei im drucklosen Zustand der Bremseinrichtung 26 eine relativ genau definierte Lage des Bremsschuhs 72 gegenüber der Bremsbahn 74 gewährleistet ist und andererseits eine gleichmäßige Druckeinwirkung des Bremsschuhs 72 auf die Bremsbahn 74 ermöglicht ist. Will man eine ständige definierte Dämpfung unabhängig von dem Druck des Bremsmediums, so kann man den Rahmen 78 auch so justieren, daß der Bremsschuh 72 auch ohne Druckbeaufschlagung mit definierter Anpreßkraft an der Bremsbahn 74 anliegt.

Die symmetrische Anordnung der beiden Bremsschuhe 72 bezüglich der Symmetrieebene S-S sorgt für die Vermeidung von Reaktionsmomenten beim Bremsen. Ein weiterer Vorteil der erfindungsgemäßen Lösung kann darin gesehen werden, daß die Begrenzungswände 70 leicht aus verschiedenen Materialien, wie etwa Stahl oder Kunststoff hergestellt werden können, bei Verschleiß leicht zu ersetzen sind und den jeweiligen Gegebenheiten, sei es dem geforderten Brems- oder Dämpfvermögen, angepaßt werden können.

Wenn hier von Bremsen gesprochen wird, so soll dieser Begriff auch das Feststellen der Führungswagenbaugruppe 20 in bestimmten Arbeitspositionen mitumfassen, auch dann, wenn das Anfahren dieser Arbeitspositionen ohne bremsbedingte Verzögerung geschieht.

Der Antrieb der Führungswagenbaugruppe 20 kann in bekannter Weise durch einen Spindeltrieb, einen Kolbentrieb, Linearmotor oder Riementrieb erfolgen.

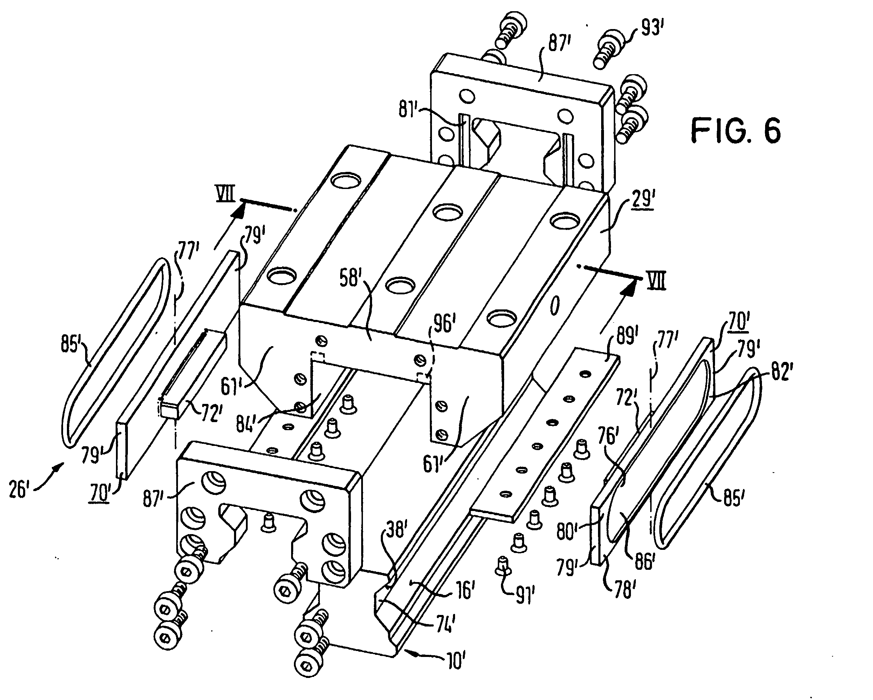

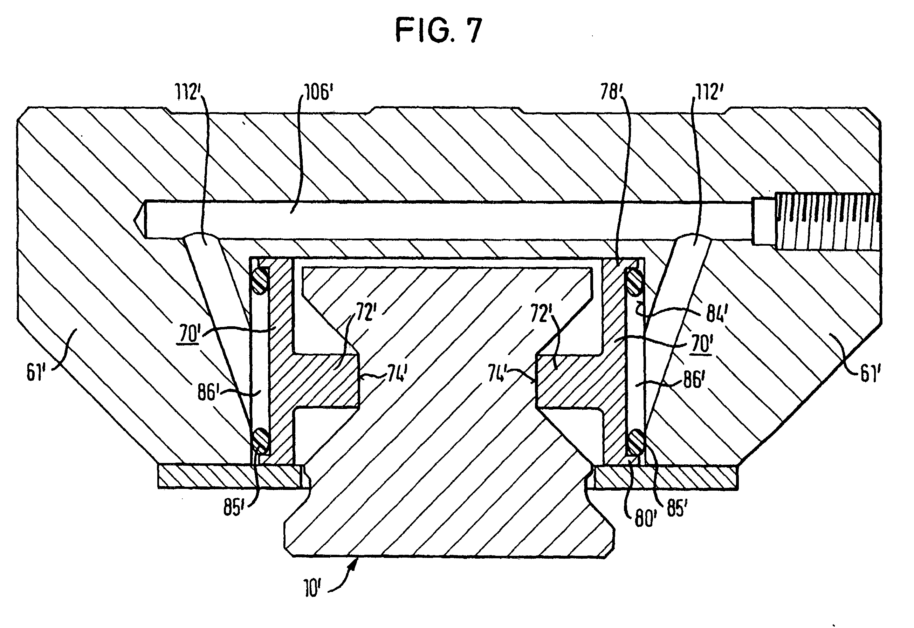

In der Ausführungsform nach den Fig. 6 und 7 sind analoge Teile mit gleichen Bezugszeichen versehen wie in der Ausführungsform nach den Fig. 1 - 5, wobei jedoch jeweils ein Apostroph hinter die jeweilige Bezugsziffer gesetzt ist.

Gemäß Fig. 6 und 7 sind an den Schenkeln 61' des Grundkörpers 29' der Bremseinrichtungsbaugruppe 26' Begrenzungswände 70' nach Art eines Biegebalkens gelagert. Diese Begrenzungswände 70' weisen auf ihrer dem jeweiligen Schenkel 61' zugekehrten Seite Überstände 80' auf, welche jeweils einer Gegenanlagefläche 84' des zugehörigen Schenkels 61' anliegen. Diese Überstände definieren zusammen mit der jeweiligen Gegenanlagefläche 84' und der jeweiligen Dichtung 85' Druckkammern 86', welche über die Leitungen 106' und 112' mit einer Druckmittelversorgung verbunden sind. Wenn Druckmittel durch die Leitungen 106' und 112' zugeführt wird, so wölben sich die Begrenzungswände 70' um Biegeachsen 77' zu den Bremsbahnen 74' hin, so daß die Bremsschuhe 72' bremsend gegen die jeweiligen Bremsbahnen 74' angedrückt werden. Die Begrenzungswände 70' sind mit ihren Enden 79' in Kammern 81' von Endplatten 87' aufgenommen, so daß sie an den Enden festgelegt sind und sich nur in ihrer Mitte, d.h. im Bereich der Biegeachsen 77', zylindrisch ausbauchen können. Die Abdichtung der Fluidendruckkammern 86' bleibt dank der durch die Überstände 78' gesicherten Dichtungen 85' dennoch erhalten.

Nach unten sind die Begrenzungswände 70' durch Befestigungsleisten 89' gesichert, die durch Niete 91' an den Schenkeln 61' befestigt sind. Die Endplatten 87' sind an dem Grundkörper 29' der Bremseinrichtungsbaugruppe 26' durch Kopfschrauben 93' befestigt.

Die Ausführungsform nach den Fig. 6 und 7 ist grundsätzlich auch geeignet, zu einer sich 3-dimensional wölbenden Membranlösung umgestaltet zu werden. Man könnte eine solche Umgestaltung in der Weise vornehmen, daß man die Befestigungsleiste 89' zusammenhängend mit dem Rahmen 78' ausführt und die Oberkante des Rahmens 78' in eine Ausnehmung 96' eingreifen läßt. Dann ist der ganze Rahmen 78' relativ zu dem Schenkelteil 61' starr festgelegt und eine kuppelförmige 3-dimensionale Wölbung findet im Zentralbereich 76' statt, wobei dieser Zentralbereich 76' dann wieder als allseitig starr eingespannte Membran zu verstehen ist, die sich um zwei orthogonal gekreuzte Achsen biegend zur Bremsbahn 74' hin auswölben kann.

## Patentansprüche

1. Linearführungseinrichtung umfassend mindestens eine auf einem Führungsbahnsystem (10) geführte Führungswagenbaugruppe (20) mit einer Bremseinrichtung (26) zur Abbremsung oder/und Feststellung oder/und Schwingungsdämpfung der Führungswagenbaugruppe (20) gegenüber dem Führungsbahnsystem (10),
wobei die Führungswagenbaugruppe (20) zumindest im Bereich der Bremseinrichtung im Wesentlichen U-förmig ausgeführt ist, mit einem einer Kopffläche (14) einer Führungsschiene (10) benachbarten Stegteil (59) und mit Seitenflächen (16) der Führungsschiene (10) benachbarten Schenkeiteifen (61),
wobei die Bremseinrichtung (26) mindestens eine Bremsfläche (72) umfaßt, welche mit der Führungswagenbaugruppe (20) zur gemeinsamen Bewegung längs des Führungsbahnsystems (10) verbunden ist, wobei weiter diese Bremsfläche (72) zum reibenden Eingriff mit einer in Längsrichtung des Führungsbahnsystems (10) verlaufenden Bremsbahn (74) bestimmt und eingerichtet ist, und
wobei die Bremsfläche (72) durch einen flexiblen Bremsflächenträger (70) getragen und durch Fluidendruckaufbau in einer an den Bremsflächenträger (70) angrenzenden Fluidendruckkammer (86) gegen die Bremsbahn (74) andrückbar ist,
wobei an jedem Schenkelteil (61) jeweils ein flexibler Bremsflächenträger (70) vorgesehen ist,
**dadurch gekennzeichnet,**
**dass** jeder der flexiblen Bremsflächenträger (70) mit einer die Fluidendruckkammer (86) im wesentlichen nur zur Bremsbahn (74) hin abgrenzenden plattenförmigen oder flachschalenförmigen Begrenzungswand (70) ausgebildet ist, welche einer Seitenfläche (16) der Führungsschiene (10) gegenüberliegt, von sonstigen Begrenzungsteilen der Fluidendruckkammer (86) gesondert hergestellt ist, längs ihres Randbereichs gegenüber sonstigen Begrenzungsteilen der Fluidendruckkammer (86) abgedichtet ist, längs wenigstens eines Teils ihres Randbereichs an der Führungswagenbaugruppe (20) im wesentlichen starr befestigt ist und zumindest in einem Zentralbereich (76) ihrer Flächenausdehnung zu der Bremsbahn (74) hin elastisch wölbbar ist.

2. Linearführungseinrichtung nach Anspruch 1,
**dadurch gekennzeichnet,**
**daß** die Begrenzungswand (70) längs wenigstens eines Teils ihres Randbereichs mit einem versteifenden Rahmen (78) ausgeführt ist.

3. Linearführungseinrichtung nach Anspruch 2,
**dadurch gekennzeichnet,**
**daß** die Begrenzungswand (70) einstückig mit dem versteifenden Rahmen (78) ausgebildet ist.

4. Linearführungseinrichtung nach einem der Ansprüche 1 - 3,
**dadurch gekennzeichnet,**
**daß** die Bremsfläche (72) einstückig mit der Begrenzungswand (70) ausgebildet ist, vorzugsweise als Teil eines vorspringenden Bremsschuhs (72).

5. Linearführungseinrichtung nach einem der Ansprüche 1 - 4,
**dadurch gekennzeichnet,**
**daß** die Bremsfläche (72) von einem Bremsschuh gebildet ist und daß der Verbindungsbereich des Bremsschuhs (72) mit der Begrenzungswand (70) von deren Randbereich allseitig Abstand hat.

6. Linearführungseinrichtung nach einem der Ansprüche 2 - 5,
**dadurch gekennzeichnet,**
**daß** der versteifende Rahmen (78) auf der von der Bremsfläche (72) abgelegenen Seite der Begrenzungswand (70) zur fluiddichten Anlage an einer Gegenanlagefläche (84) vorspringt.

7. Linearführungseinrichtung nach einem der Ansprüche 1 - 6,
**dadurch gekennzeichnet,**
**daß** die Begrenzungswand (70) an der Führungswagenbaugruppe (20) lösbar befestigt ist, insbesondere durch Schraubmittel (92,100) und/oder durch formschlüssigen Eingriff.

8. Linearführungseinrichtung nach Anspruch 1,
**dadurch gekennzeichnet,**
**daß** ein dem Stegteil (59) naher Teil (96) des Randbereichs in die Führungswagenbaugruppe (20) formschlüssig eingreift und ein dem Stegteil (59) ferner Teil des Randbereichs an der Führungswagenbaugruppe (20) unter Sicherung des formschlüssigen Eingriffs befestigt ist.

9. Linearführungseinrichtung nach Anspruch 1,
**dadurch gekennzeichnet,**
**daß** der Randbereich mindestens einen Befestigungsflansch (98) aufweist, welcher an einer dem Stegteil (59) fernen Endfläche des jeweiligen Schenkelteils (61) anliegt und dort - vorzugsweise durch Schraubmittel (100) - befestigt ist.

10. Linearführungseinrichtung nach einem der Ansprüche 1 - 9 ,
**dadurch gekennzeichnet,**
**daß** die Bremsfläche (72) zur Anlage an einer als Bremsbahn (74) ausgebildeten Bodenfläche einer in einer Seitenfläche (16) der Führungsschiene (10) versenkt liegenden Führungsnut ausgebildet ist, insbesondere wenn Flankenflächen (38,40) dieser Führungsnut zur Führung der Führungswagenbaugruppe (20) bestimmt und ausgebildet sind.

11. Linearführungseinrichtung nach einem der Ansprüche 1 - 10 ,
**dadurch gekennzeichnet,**
**daß** die Führungswagenbaugruppe (20) einen durch Rollmittel (34,36) an dem Führungsbahnsystem (10) geführten Laufwagen umfaßt.

12. Linearführungseinrichtung nach Anspruch 11,
**dadurch gekennzeichnet,**
**daß** die Bremseinrichtung (26) an dem Laufwagen angeordnet ist.

13. Linearführungseinrichtung nach Anspruch 11,
**dadurch gekennzeichnet,**
**daß** die Bremseinrichtung (26) als eine gesonderte, mit dem Laufwagen zur gemeinsamen Bewegung verbundenen Baugruppe ausgebildet ist.

14. Linearführungseinrichtung nach Anspruch 13,
**dadurch gekennzeichnet,**
**daß** die Bremseinrichtung (26) und der Laufwagen entweder unmittelbar oder unter Vermittlung eines Objekts bzw. einer Brücke miteinander verbunden sind.

15. Linearführungseinrichtung nach einem der Ansprüche 1 -14 ,
**dadurch gekennzeichnet,**
**daß** die Begrenzungswand (70) als Metallteil, insbesondere Stahlteil, oder als steifes Kunststoffteil hergestellt ist.

16. Linearführungseinrichtung nach einem der Ansprüche 1 -15 ,
**dadurch gekennzeichnet,**
**daß** die Begrenzungswand (70) in ihrem Zentralbereich (76) um zwei zueinander im wesentlichen orthogonale Achsen (77-1,77-2) biegbar, d.h. wölbbar ist.

17. Linearführungseinrichtung nach einem der Ansprüche 2 - 16 ,
**dadurch gekennzeichnet,**
**daß** der Zentralbereich (76) der Begrenzungswand (70) nach Art einer rundum eingespannten Membran festgelegt ist.

18. Linearführungseinrichtung nach einem der Ansprüche 1 *-*15 ,
**dadurch gekennzeichnet,**
**daß** die Begrenzungswand (70') nach Art eines Biegebalkens in zwei voneinander beabstandeten Teilbereichen ihres Randbereichs eingespannt ist.

19. Linearführungseinrichtung nach Anspruch 18,
**dadurch gekennzeichnet,**
**daß** die Begrenzungswand (70') an ihren in Längsrichtung des Führungsbahnsystems (10') beabstandeten Enden eingespannt ist.

20. Linearführungseinrichtung nach Anspruch 19,
**dadurch gekennzeichnet,**
**daß** mindestens eines der Enden in einem Schlitz (81') einer Endplatte (87') aufgenommen ist.

## Claims

1. Linear guide arrangement comprising at least one guide-carriage subassembly (20) guided on a guide-track system (10), having a braking arrangement (26) for braking and/or arresting the guide-carriage subassembly (20), or damping vibrations of the same, in relation to the guide-track system (10),
it being the case that the guide-carriage subassembly (20) is of essentially U-shaped configuration at least in the region of the braking arrangement, having a crosspiece part (59) adjacent to a head surface (14) of a guide rail (10), and having leg parts (61) adjacent to side surfaces (16) of the guide rail (10),
that the braking arrangement (26) comprises at least one braking surface (72) which is connected to the guide-carriage subassembly (20) for joint movement along the guide-track system (10), and that, furthermore, this braking surface (72) is intended, and set up, for frictional engagement with a braking track (74) running in the longitudinal direction of the guide-track system (10), and
that the braking surface (72) is borne by a flexible braking-surface carrier (70) and can be pressed against the braking track (74) by the build-up of fluid pressure in a fluid-pressure chamber (86) adjacent to the braking-surface carrier (70),
in each case one flexible braking-surface carrier (70) being provided on each leg part (61),
**characterized in that** each of the flexible braking-surface carriers (70) is designed with a plate-like or flat-shell-like boundary wall (70) which bounds the fluid-pressure chamber (86) essentially just in the direction of the braking track (74), is located opposite a side surface (16) of the guide rail (10), is produced separately from other boundary parts of the fluid-pressure chamber (86), is sealed in relation to other boundary parts cf the fluid-pressure chamber (86) along its peripheral region, is fastened in an essentially rigid manner on the guide-carriage subassembly (20) along at least part of its peripheral region, and can be curved elastically in the direction of the braking track (74) at least in a central region (76) of the extent of its surface area.

2. Linear guide arrangement according to Claim 1, **characterized in that** the boundary wall (70) is configured with a stiffening frame (78) along at least part of its peripheral region.

3. Linear guide arrangement according to Claim 2, **characterized in that** the boundary wall (70) is formed integrally with the stiffening frame (78).

4. Linear guide arrangement according to one of Claims 1-3, **characterized in that** the braking surface (72) is formed integrally with the boundary wall (70), preferably as part of a projecting brake shoe (72).

5. Linear guide arrangement according to one of Claims 1-4, **characterized in that** the braking surface (72) is formed by a brake shoe, and **in that** the connecting region between the brake shoe (72) and the boundary wall (70) is spaced apart all the way around from the peripheral region of the latter.

6. Linear guide arrangement according to one of Claims 2-5, **characterized in that**, on that side of the boundary wall (70) which is remote from the braking surface (72), the stiffening frame (78) projects for fluid-tight abutment against a mating abutment surface (84).

7. Linear guide arrangement according to one of Claims 1-6, **characterized in that** the boundary wall (70) is fastened in a releasable manner on the guide-carriage subassembly (20), in particular by screw-connection means (92, 100) and/or by form-fitting engagement.

8. Linear guide arrangement according to Claim 1, **characterized in that** a part (96) of the peripheral region, this part being in the vicinity of the crosspiece part (59), engages in a form-fitting manner in the guide-carriage subassembly (20), and a part of the peripheral region which is remote from the crosspiece part (59) is fastened on the guide-carriage subassembly (20), the form-fitting engagement being secured in the process.

9. Linear guide arrangement according to Claim 1, **characterized in that** the peripheral region has at least one fastening flange (98) which butts against an end surface of the respective leg part (61) which is remote from the crosspiece part (59), and which is fastened there - preferably by screw-connection means (100).

10. Linear guide arrangement according to one of Claims 1-9, **characterized in that** the braking surface (72) is designed for abutment against a base surface which is designed as a braking track (74) and belongs to a guide groove which is sunken in a side surface (16) of the guide rail (10), in particular if flank surfaces (38, 40) of this guide groove are intended, and designed, for guiding the guide-carriage subassembly (20).

11. Linear guide arrangement according to one of Claims 1-10, **characterized in that** the guide-carriage subassembly (20) comprises a travelling carriage which is guided by rolling means (34, 36) on the guide-track system (10).

12. Linear guide arrangement according to Claim 11, **characterized in that** the braking arrangement (26) is arranged on the travelling carriage.

13. Linear guide arrangement according to Claim 11, **characterized in that** the braking arrangement (26) is designed as a separate subassembly which is connected to the travelling carriage for joint movement.

14. Linear guide arrangement according to Claim 13, **characterized in that** the braking arrangement (26) and the travelling carriage are connected to one another either directly or with the interposition of an object or of a bridge.

15. Linear guide arrangement according to one of Claims 1-14, **characterized in that** the boundary wall (70) is produced as a metal part, in particular steel part, or as a rigid plastic part.

16. Linear guide arrangement according to one of Claims 1-15, **characterized in that** the boundary wall (70) can be bent, i.e. curved, in its central region (76) about two essentially orthogonal axes (77-1, 77-2).

17. Linear guide arrangement according to one of Claims 2-16, **characterized in that** the central region (76) of the boundary wall (70) is secured in the manner of a diaphragm which is clamped in all the way round.

18. Linear guide arrangement according to one of Claims 1-15, **characterized in that** the boundary wall (70') is clamped in, in the manner of a bending beam, in two spaced-apart sub-regions of its peripheral region.

19. Linear guide arrangement according to Claim 18, **characterized in that** the boundary wall (70') is clamped in at its ends which are spaced apart in the longitudinal direction of the guide-track system (10').

20. Linear guide arrangement according to Claim 19, **characterized in that** at least one of the ends is accommodated in a slot (81') of an end plate (87').

## Revendications

1. Dispositif de guidage linéaire comprenant au moins un ensemble de chariot de guidage (20) guidé sur un système de rail de guidage (10) avec un dispositif de freinage (26) pour freiner et/ou immobiliser et/ou amortir les vibrations de l'ensemble de chariot de guidage (20) par rapport au système de rail de guidage (10), l'ensemble de chariot de guidage (20) présentant, au moins au niveau du dispositif de freinage, une forme de U, avec un étai (59) à proximité d'une surface supérieure (14) d'un rail de guidage (10) et avec des montants (61) à proximité des surfaces latérales (16) du rail de guidage (10), le dispositif de freinage (26) comprenant au moins une surface de freinage (72) qui est reliée avec l'ensemble de chariot de guidage (20) pour le déplacement simultané le long du système de rail de guidage (10), cette surface de freinage (72) étant destinée à s'emboîter avec friction sur une piste de freinage (74) dans le sens longitudinal du système de rail de guidage (10), et la surface de freinage (72) étant supportée par un support de surface de freinage flexible (70) et pouvant être comprimée, à l'aide d'une augmentation de la pression d'un fluide dans une chambre de pression de fluide (86) adjacente au support de surface de freinage (70), contre la piste de freinage (74), un support de surface de freinage flexible (70) étant prévu sur chaque montant (61), **caractérisé en ce que** chacun des supports de surfaces de freinages flexibles (70) est conçu avec une paroi de limitation (70) en forme de plaque ou de coque plate limitant la chambre de pression de fluide (86) en direction de la piste de freinage (74), située en face d'une surface latérale (16) du rail de guidage (10), est constitué d'autres éléments de limitation de la chambre de pression de fluide (86), est étanchéifié le long de leur bord par rapport à d'autres éléments de limitation de la chambre de pression de fluide (86), est fixé de manière rigide le long d'au moins une partie de leur bord sur l'ensemble de chariot de guidage (20), et peut être incurvé élastiquement dans au moins une partie centrale (76) de leur surface vers la piste de freinage (74).

2. Dispositif de guidage linéaire selon la revendication 1, **caractérisé en ce que** la paroi de limitation (70) est réalisée, le long d'au moins une partie de son bord, avec un châssis de renforcement (78).

3. Dispositif de guidage linéaire selon la revendication 2, **caractérisé en ce que** la paroi de limitation (70) est concue d'un seul bloc avec le châssis de renforcement (78).

4. Dispositif de guidage linéaire selon l'une des revendications 1 à 3, **caractérisé en ce que** la surface de freinage (72) est conçue d'un seul bloc avec la paroi de limitation (70), de préférence comme une partie d'un sabot de frein (72) en saillie.

5. Dispositif de guidage linéaire selon l'une des revendications 1 à 4, **caractérisé en ce que** la surface de freinage (72) est constituée d'un sabot de frein et **en ce que** la partie de liaison du sabot de frein (72) avec la paroi de limitation (70) est à une certaine distance, de tous les côtés, de son bord.

6. Dispositif de guidage linéaire selon l'une des revendications 2 à 5, **caractérisé en ce que** le châssis de renforcement (78) dépasse, sur le côté de la paroi de limitation (70) opposé à la surface de freinage (72), pour un appui étanche aux fluides contre une surface d'appui opposée (84).

7. Dispositif de guidage linéaire selon l'une des revendications 1 à 6, **caractérisé en ce que** la paroi de limitation (70) est fixé de manière amovible sur l'ensemble de chariot de guidage (20), notamment par des vis (92, 100) et/ou par emboîtement à complémentarité de forme.

8. Dispositif de guidage linéaire selon la revendication 1, **caractérisé en ce qu'**une partie (96) du bord proche de l'étai (59) s'emboîte par complémentarité de forme dans l'ensemble de chariot de guidage (20) et une partie éloignée de l'étai (59) est fixée sur l'ensemble de chariot de guidage (20) en assurant l'emboîtement par complémentarité de forme.

9. Dispositif de guidage linéaire selon la revendication 1, **caractérisé en ce que** le bord comprend au moins une bride de fixation (98) qui s'appuie contre une surface d'extrémité du montant (61) correspondant éloignée de l'étai (59) et y est fixée de préférence à l'aide de vis (100).

10. Dispositif de guidage linéaire selon l'une des revendications 1 à 9, **caractérisé en ce que** la surface de freinage (72) est conçue pour être appuyée contre le fond d'une rainure de guidage affleurant dans une surface latérale (16) du rail de guidage (10) et conçu comme une surface de freinage (74), plus particulièrement lorsque les flancs (38, 40) de cette rainure de guidage sont conçus pour le guidage de l'ensemble de chariot de guidage (20).

11. Dispositif de guidage linéaire selon l'une des revendications 1 à 10, **caractérisé en ce que** l'ensemble de chariot de guidage (20) comprend un chariot guidé à l'aide de roulements (34, 36) sur le système de rail de guidage (10).

12. Dispositif de guidage linéaire selon la revendication 11, **caractérisé en ce que** le dispositif de freinage (26) est disposé sur le chariot.

13. Dispositif de guidage linéaire selon la revendication 11, **caractérisé en ce que** le dispositif de freinage (26) est conçu comme un ensemble séparé relié au chariot pour un déplacement simultané.

14. Dispositif de guidage linéaire selon la revendication 13, **caractérisé en ce que** le dispositif de freinage (26) et le chariot sont reliés entre eux soit directement soit par l'intermédiaire d'un objet ou d'un pont.

15. Dispositif de guidage linéaire selon l'une des revendications 1 à 14, **caractérisé en ce que** la paroi de limitation (70) est réalisée comme un élément métallique, plus particulièrement en acier ou comme un élément en matière plastique rigide.

16. Dispositif de guidage linéaire selon l'une des revendications 1 à 15, **caractérisé en ce que** la paroi de limitation (70) est flexible, c'est à dire qu'elle peut être incurvée, dans sa partie centrale (76) autour de deux axes (77-1, 77-2) orthogonaux entre eux.

17. Dispositif de guidage linéaire selon l'une des revendications 2 à 16, **caractérisé en ce que** la partie centrale (76) de la paroi de limitation (70) est fixée à la manière d'une membrane tendue sur le pourtour.

18. Dispositif de guidage linéaire selon l'une des revendications 1 à 15, **caractérisé en ce que** la paroi de limitation (70') est tendue à la manière d'une barre flexible sur deux parties de leur bord éloignées l'une de l'autre.

19. Dispositif de guidage linéaire selon la revendication 18, **caractérisé en ce que** la paroi de limitation (70') est tendue au niveau des extrémités du système de rail de guidage (10') éloignées dans la direction longitudinale.

20. Dispositif de guidage linéaire selon la revendication 19, **caractérisé en ce qu'**au moins une des extrémités est logée dans une fente (81') d'une plaque d'extrémité (87').
